# FASCICULE DE BREVET EUROPEEN

(11) **EP 2 691 301 B1**
(45) Date de publication et mention de la délivrance du brevet: **22.07.2015**
(21) Numéro de dépôt: 12710731.6
(22) Date de dépôt: 26.03.2012
(51) Int. Cl.: B64D 11/06

(54) **SIEGE D'AERONEF EQUIPE D'UNE BANDE DE RENFORT POUR AMORTIR LES CHOCS**
FLUGZEUGSITZ MIT EINEM VERSTÄRKUNGSSTREIFEN ZUR STOSSDÄMPFUNG
AIRPLANE SEAT PROVIDED WITH A REINFORCING STRIP FOR ABSORBING IMPACTS

(30) Priorité: 30.03.2011 FR 1100937; 16.06.2011 FR 1101840
(43) Date de publication de la demande: 05.02.2014
(73) Titulaire: Expliseat, 75006 Paris (FR)
(72) Inventeur: SAADA, Benjamin, Jacob, 13007 Marseille (FR); SAMUELIAN, Jean-Charles, Marcel, 75005 Paris (FR); TEJEDOR, Vincent, 78500 Sartrouville (FR)
(74) Mandataire: Ilgart, Jean-Christophe
(86) Numéro de dépôt international: PCT/EP2012/055345
(87) Numéro de publication internationale: WO 2012/130809

(56) Documents cités:
- GB-A- 817 264
- US-A- 4 375 300
- US-A- 5 787 562
- US-A1- 2006 186 723
- US-A1- 2008 290 715

## Description

### DOMAINE TECHNIQUE

La présente invention appartient au domaine de la fabrication d'aménagements de cabines d'aéronefs, pour l'aviation générale, l'aviation commerciale, les hélicoptères ou l'aviation militaire. Elle concerne plus particulièrement la réalisation d'un siège d'aéronef supportant un ou plusieurs passagers et équipé de moyens d'amortissement de chocs pour le passager se trouvant sur le siège de derrière (choc avant), ou au niveau de l'assise (choc vers le bas).

### ÉTAT DE LA TECHNIQUE ANTÉRIEURE

Le volume des sièges des aéronefs est une préoccupation qui cherche à répondre à l'augmentation du nombre de passagers transportés chaque année. En réduisant le volume unitaire des sièges, il est possible de diminuer l'espacement entre deux rangées de sièges et d'augmenter le nombre de passagers pouvant prendre place au sein d'aéronefs, ou à l'inverse, d'augmenter l'espace dévolu à chaque passager ou celui dévolu aux marchandises. Un meilleur remplissage de l'avion permet, à flux de passagers constant sur une ligne aérienne de diminuer le nombre de vols : le carburant économisé réduit d'autant les rejets de gaz à effet de serre.

La diminution du volume des sièges ne doit pas diminuer la sécurité des passagers transportés. Les normes de sécurité relatives aux sièges d'aéronefs sont drastiques, notamment en termes de résistance aux chocs.

Cette contrainte qu'est la résistance et l'amortissement du passager en cas de chocs, a longtemps conduit à réaliser des sièges d'aéronefs destinés aux passagers à l'aide d'une structure en métal et de coussins déformables. La structure, constituée d'un grand nombre de pièces métalliques, est particulièrement résistante en cas de chocs. Mais ces structures sont denses et rendent les sièges assez lourds. Les coussins déformables, situés au niveau de l'assise et du dossier, permettent un bon amorti du passager. Mais ils sont également assez denses et accroissent le poids total du siège.

La complexité de ce type de sièges soulève plusieurs problèmes, lors de sa fabrication, de son entretien, ou pour le suivi des différentes pièces. Plus le nombre de pièces composant le siège d'aéronef est élevé, plus la logistique et le processus de fabrication de ce siège sont complexes et coûteux. Les fixations de ces différentes pièces entre elles sont souvent métalliques (typiquement en acier inoxydable), pour satisfaire aux normes de sécurité, et alourdissent le siège. Enfin, au niveau de la conception du siège, chaque pièce devant satisfaire les normes de sécurité, une diminution du nombre de pièces limite les tests à pratiquer et donc, le temps total nécessaire à la certification du siège. Une réduction du nombre de pièces permet ainsi une diminution du volume et du poids du siège.

Par ailleurs, ces sièges intègrent historiquement des fonctions coûteuses, en poids et en valeur, qui ne sont plus adaptées aux configurations des cabines actuelles. L'inclinaison du dossier, par exemple, n'est plus utilisable quand l'espace entre les rangées de sièges est réduit.

Un squelette de siège, de faible poids, combiné à un dossier flexible, permet de remédier à ces inconvénients. La forme du siège allie le confort du passager, notamment par le dossier, et éventuellement l'assise, flexible(s), et la résistance mécanique du squelette, afin de respecter les normes en vigueur dans le transport de passagers par voie aérienne. Elle dissocie la résistance structurale, assurée par un élément rigide unique formant le squelette, et l'assise et le dossier du passager, réalisés dans un matériau flexible.

Néanmoins, la contrainte d'amortissement du passager dans de bonnes conditions de sécurité doit toujours être respectée. Le but de l'invention est donc de doter le siège d'aéronef selon l'invention de moyens d'amortissement du passager placé derrière le siège, en cas de choc frontal de l'aéronef, la tête de ce passager se trouvant derrière basculant contre l'arrière du dossier du siège se trouvant devant lui. De même, un moyen d'amortissement placé au niveau de l'assise permet de retenir le passager en cas de choc vers le bas de l'aéronef.

La demande de brevet US 2008/0290715 A1 décrit un exemple d'ensemble de sièges pour avion selon l'art antérieur.

### RESUME DE L'INVENTION

A cet effet, l'objet principal de l'invention est un siège pour aéronef selon la revendication 1.

Selon l'invention, une bande de renfort peut être placée au niveau de l'assise pour amortir les chocs vers le bas, très important dans le cas d'hélicoptères. Le siège peut être équipé de ces deux bandes.

Dans l'une des deux principales réalisations selon l'invention, le textile absorbeur d'énergie est constitué d'un tricotage de structure à un seul fil.

Dans ce cas, il est avantageux que le tricotage soit du type point de jersey.

Une variante de cette première réalisation est d'utiliser plusieurs fils en parallèle pour le tricotage.

Dans la deuxième réalisation principale de l'invention, le textile absorbeur d'énergie est tissé avec des fils de trame et des fils de chaîne.

Il est préférable que les fils de trame et les fils de chaîne aient approximativement la même résistance.

Dans une variante de cette deuxième réalisation principale selon l'invention, le fil est constitué en fait d'un fil tendu élastique entouré d'un fil lâche mais à haute ténacité.

Dans ce cas de variante utilisant le fil tendu élastique entouré d'un fil lâche à haute ténacité, il est avantageux que le fil tendu élastique soit en polyamide (par exemple Nylon ®).

Les matériaux utilisés pour constituer le textile absorbeur d'énergie de la bande de renfort sont du groupe constitué par les fibres de polyéthérimide, les fibres de polyéthercétone, les fibres de polyéthylène à haut poids moléculaire, les fibres de méta- et para-aramide, les fibres naturelles (lin, chanvre, jute...) et les fibres en polyamide.

### LISTE DES FIGURES

L'invention et ses différentes caractéristiques techniques seront mieux comprises à la lecture de la description suivante illustrée de huit figures qui sont les suivantes :
- figure 1, en vue cavalière, de côté et légèrement par devant, un siège selon l'invention ;
- figure 2, le même siège que la figure 1 avec la même orientation, mais en vue éclatée ;
- figure 3, le même siège que celui des deux figures précédentes, en vue cavalière et vue de derrière, toujours en vue éclatée ;
- figure 4, schéma du tricotage utilisé pour la bande de renfort du siège selon l'invention ;
- figure 5, une variante du tricotage utilisé pour la bande de renfort du siège selon l'invention ;
- figure 6, un schéma du tissage utilisé pour la bande de renfort du siège selon l'invention, et
- figures 7A et 7B, de vues relatives à une variante du fil utilisé pour le tissage de la bande de renfort du siège selon l'invention.

### DESCRIPTION DETAILLEE DE L'INVENTION

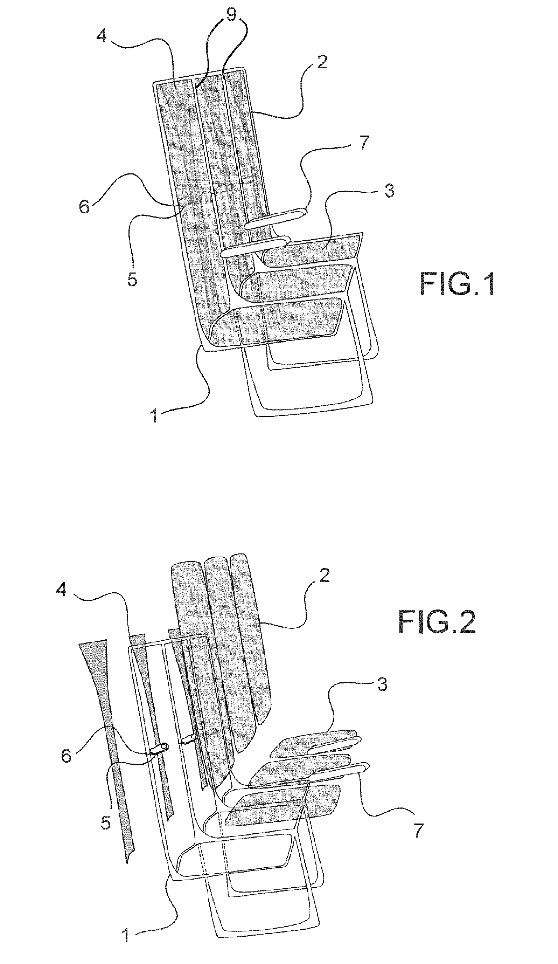

En référence à la figure 1, le siège selon l'invention est formé d'un squelette 1, qui peut être moulé, formé ou assemblé selon le choix du matériau, et deux parties flexibles formant le dossier 2 et éventuellement l'assise 3. Un siège pour le transport de passagers par aéronef remplit plusieurs fonctions : résistance dynamique aux chocs et aux fortes accélérations, assise et dossier du passager, support de divers accessoires (tablette pliable, range-revues, accoudoirs, ...). Chacune de ces fonctions correspond à un élément du siège que l'on peut optimiser séparément pour réduire le volume et le poids total du siège.

La première fonction du siège est la résistance structurale. Cette fonction est dans le cas de l'invention assurée par un squelette. Par squelette, on entend la partie rigide du siège qui lui confère la résistance structurale : le dossier 2, l'assise 3 ainsi que les points d'arrimage des accessoires ne jouent pas ce rôle. Le squelette d'un siège est usuellement articulé, mais peut-être allégé en devenant rigide.

Cette figure 1 montre un squelette 1 minimal du siège, formé d'une structure tubulaire creuse. Les points d'attache sont situés sur la partie du siège liée au plancher de l'aéronef. Dans le cas d'un siège à trois places, comme représenté sur la figure 1, les deux barres verticales centrales 9 au centre du dossier peuvent être directement reliées aux points d'attache du siège au plancher de l'aéronef dans le cas d'un dossier non articulé, afin de minimiser le poids du squelette.

Cette fixation au plancher de l'aéronef peut avoir lieu directement, par exemple par insertion des deux barres inférieures 10 du squelette 1 dans des rails aménagés dans le plancher de l'aéronef, ou indirectement, par fixation sur une structure intermédiaire rigide. Cette dernière est arrimée au plancher de l'aéronef. L'utilisation d'une structure d'aéronef rigide permet de faciliter la pose et l'entretien des sièges.

La seconde fonction du siège est l'accueil du passager. Le dossier 2 et l'assise 3 du siège sont les parties directement en contact avec le passager et peuvent ne pas participer à la résistance structurale du siège. Ces parties sont fixées sur la structure du siège proprement dite, mais peuvent être beaucoup plus fines, afin de minimiser le poids total du siège. Le dossier 2, et éventuellement l'assise 3, sont réalisés à l'aide d'un matériau flexible Un tissage de polyester à haute tenacité par exemple peut convenir. Le maillage du tissu permet d'obtenir une forme ergonomique, marquant en particulier le creux du dos et des hanches.

La figure 2 montre l'ajout du dossier 2 et de l'assise 3 au squelette 1 du siège. Ces parties sont très légères, constituées d'un matériau flexible tel un tissage de fibres de polyester. Une bande en matériau flexible 4, dont la réalisation sera détaillée ci-après, aux propriétés différentes et constituée d'un textile absorbeur d'énergie est ajoutée derrière le dossier 2 car le matériau constituant ce dernier ne permet pas d'amortir suffisamment le passager en cas de choc violent. Une bande identique (non représentée) peut éventuellement être ajoutée sous l'assise 3 si le siège doit résister à des chocs importants vers le bas.

Sur les figures 1 et 2, on a également fait figurer des accessoires arrimés au squelette 1 du siège. On pense en particulier à des porte-gobelet 5 et 6, des accoudoirs 7.

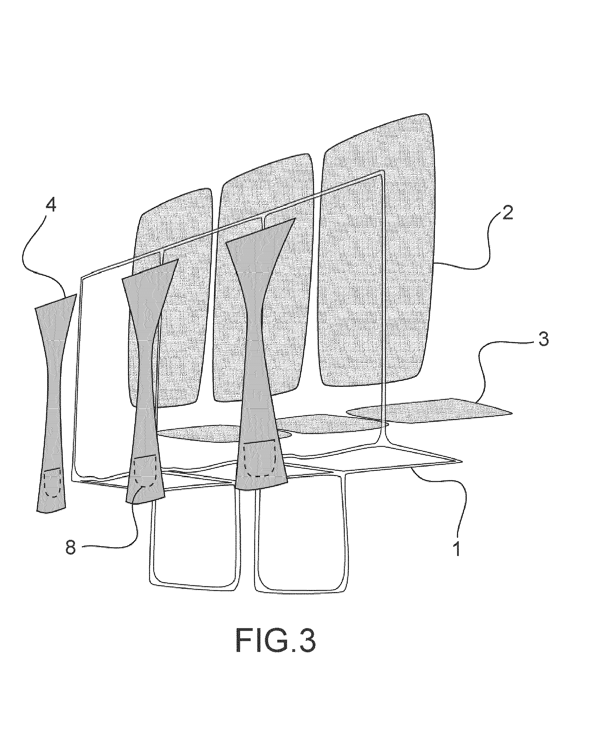

La figure 3 montre les mêmes sièges, toujours en vue éclatée, mais vus de derrière. On y retrouve le squelette 1, le dossier 2, l'assise 3, et la bande de renfort 4 placée derrière le dossier 2. Elle est munie d'un présentoir 8 pouvant servir à placer, entre autres, des magazines ou des instructions de sécurité.

La caractéristique technique principale de l'invention est l'utilisation de la bande de renfort 4 qui doit être beaucoup plus déformable que le dossier 2, et également beaucoup plus résistante. Le dossier 2 doit présenter un vide au milieu du squelette 1 ou présenter une face arrière concave pour ménager un espace pour la déformation de la bande renfort 4, lors du choc.

Le principe de la réalisation du tissu constituant la bande de renfort 4, et la bande éventuellement ajoutée sous l'assise, est de combiner une fibre très résistante et peu extensible, c'est-à-dire de haute ténacité ou résistance à la rupture, à une mise en forme élastique, afin de pouvoir amortir, sans heurt, un choc. Lors de ce dernier, le textile se déforme pour épouser la forme de l'objet à arrêter, à savoir la tête du passager se trouvant sur le siège placé derrière le siège sur le dossier duquel est placée la bande de renfort considérée. Le textile résiste à l'objet de façon uniforme, amortissant ainsi le choc. En effet, l'énergie transférée lors du choc se répartit sur toute la surface de contact entre le textile et l'objet, et non uniquement au niveau du point d'impact. La pression exercée diminue grandement, limitant les contraintes que subit l'objet.

La fibre choisie est agglomérée en fils pour permettre une mise en forme textile. Plusieurs fibres peuvent être agglomérées au sein d'un même fil. Le fil le plus simple n'est composé que de fibres à haute ténacité, telles des fibres para-aramide (Kevlar^{®} ou Twaron^{®}), des fibres polyétherimide (Ultem^{®}), polyéthercétone (PEEK^{®}), polyamide (Nylon^{®}), les fibres naturelles (lin, chanvre ou jute) ou encore poléthylène à haut poids moléculaire (Dyneema^{®} ou Spectra^{®}). La ténacité mesure la force qu'il faut exercer en traction pour rompre une fibre. Plus la ténacité est élevée, plus la fibre résiste à des forces de traction importantes. Si le textile doit avoir des qualités supplémentaires, il est possible de mêler plusieurs fibres dans le même fil, en y ajoutant, par exemple, des fibres méta-aramide (Nomex^{®}) pour la résistance au feu.

Une fois le fil constitué, ce dernier est mis en forme pour donner un textile. Deux grandes techniques sont possibles, c'est-à-dire le tricotage ou le tissage. Le tricotage n'utilise qu'un seul fil pour la surface textile, alors que le tissage mêle plusieurs fils de trame et de chaîne. Le tissage peut être utilisé pour mêler plusieurs types de fils, mais limite la résistance du textile, car les discontinuités de fils sont des points de faiblesse du textile.

Le tricotage permet d'assurer une excellente résistance mécanique au textile résultant, mais limite les possibilités de mise en forme. En effet, le textile tricoté ne peut pas être coupé et cousu à d'autres parties de textiles, sans que les performances mécaniques du tricot ne soient altérées.

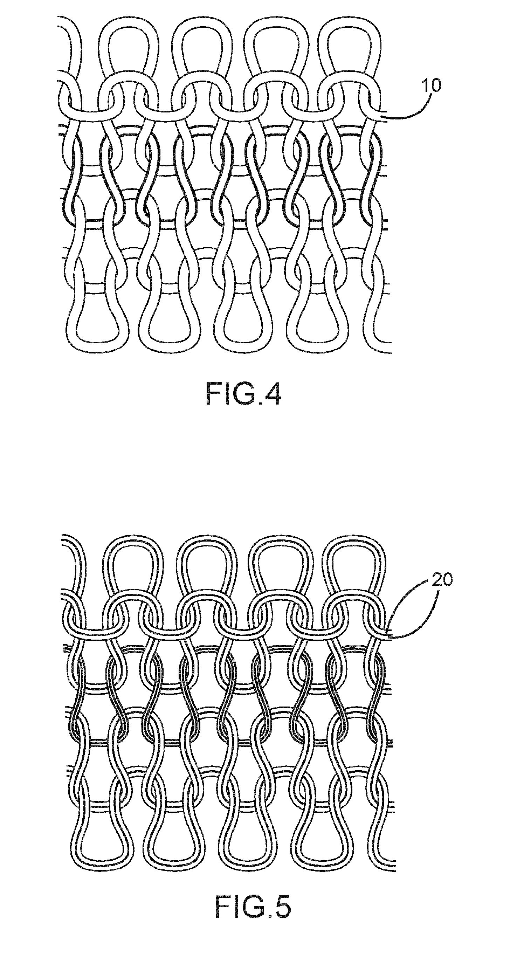

En référence à la figure 4, dans le cas du tricot, la maille de type jersey permet d'obtenir un textile relativement déformable. Le point de jersey consiste à effectuer un rang à l'endroit, puis un rang à l'envers. Le fil 10 est enroulé autour de lui-même, d'une ligne à l'autre, les boucles laissant de larges espaces vides dans la surface textile.

Quand une tension est exercée sur le textile tricoté, les boucles de fils peuvent se déformer, conférant une certaine élasticité à l'ensemble. Si la tension est importante, et excède les possibilités de déformation des mailles, le fil est sollicité en traction, et la ténacité du fil est mise en jeu. Le fait qu'un seul fil soit utilisé pour l'intégralité du tricot évite que le textile ne se déchire à partir d'un point de rupture du fil, ou à l'interface entre deux fils.

En référence à la figure 5, une variante de mise en oeuvre du tricot, représentée à la figure 1, consiste à tricoter plusieurs fils 20 en parallèle pour le même textile. La maille reste la même, mais au lieu de n'utiliser qu'un seul fil, plusieurs fils constituent chaque maille. Chacun des fils 20 est continu sur toute la surface du textile, mais les propriétés des fils peuvent se combiner. On pense, en particulier, à la résistance au feu, la résistance mécanique ou le caractère hydrofuge. Cette variante est plus simple à mettre en oeuvre que de mêler des fibres au sein d'un même fil unique, mais ne mêle pas aussi intimement les différentes fibres. L'utilisation des fils fins permet d'augmenter les interactions entre chaque fibre. Là, encore, le point de jersey peut être utilisé.

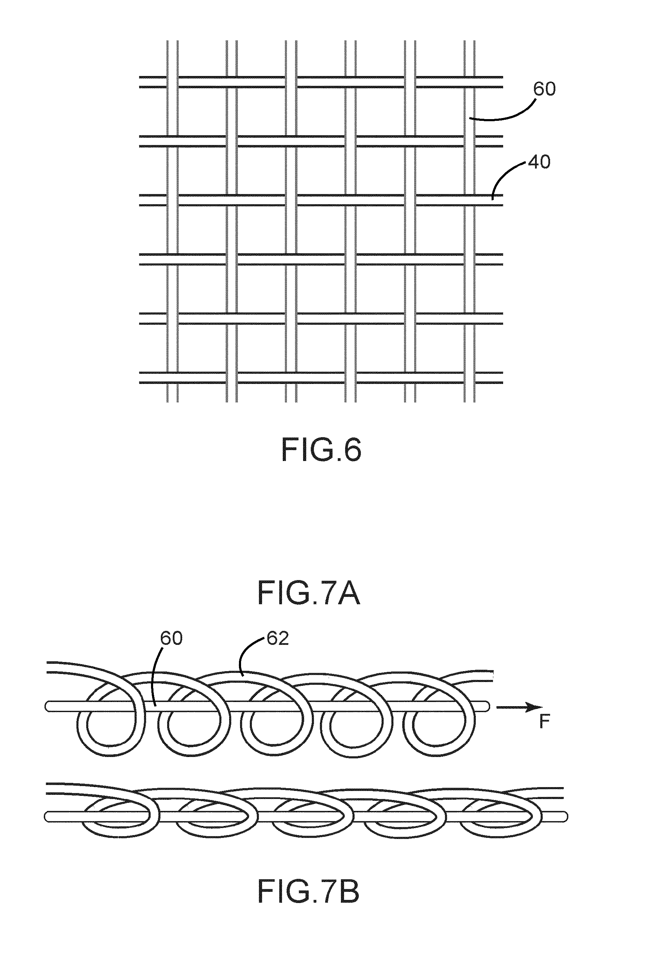

En référence à la figure 6, l'autre alternative de l'idée principale, selon l'invention, consiste à tisser ensemble différents fils qui sont les fils de trame 40 et les fils de chaîne 50. Les fils de trame 40 et de chaîne 50 peuvent être différents, mais il faut veiller à ce que la résistance mécanique de chacun de ces fils de trame 40 et de chaîne 50 soit équivalente. Toutefois, une direction peut être privilégiée par rapport à l'autre. Le tissage peut être relativement lâche et permettre un certain jeu entre les fils de trame 40 et de chaîne 50. Ce jeu donne une élasticité au textile lié, uniquement au réarrangement entre les fils et non à l'élasticité des fibres constituant les fils. Un exemple de réalisation peut être une armure toile où la trame et la chaîne sont symétriques, en fils para-aramide (Kevlar^{®} ou Twaron^{®}), polyétherimide (Ultem^{®}), polyéthercétone (PEEK^{®}), polyamide (Nylon^{®}), les fibres naturelles (lin, chanvre ou jute) ou encore en fils poléthylène à haut poids moléculaire (Dyneema^{®} ou Spectra^{®}).

Pour augmenter l'élasticité du tissage, il peut être judicieux d'utiliser à nouveau deux fils pour constituer la trame et deux fils pour constituer la chaîne. En référence à la figure 7A, on utilise un fil central 60 qui est élastique, tandis qu'un autre fil à haute ténacité 62 l'entoure de façon très large. Le fil élastique 60 peut être, par exemple, un fil de nylon (polyamide 6-6). Le fil à haute ténacité 62 peut être un fil en para-aramide (Kevlar^{®} ou Twaron^{®}), polyétherimide (Ultem^{®}), polyéthercétone (PEEK^{®}), polyamide (Nylon^{®}), les fibres naturelles (lin, chanvre ou jute) ou encore un fil poléthylène à haut poids moléculaire (Dyneema^{®} ou Spectra^{®}). Le fil à haute ténacité 62 est enroulé ou entortillé autour du fil élastique 60 qui est central.

En référence à la figure 7B, quand une tension est exercée sur le tissu, le fil élastique 60, placé au centre, s'étire, tandis que le fil à haute ténacité 62 en périphérie se déforme, se rapprochant du fil élastique 60. Si la tension excède les possibilités de déformation du fil élastique 60, qui se trouve au centre, le fil à haute ténacité 62 est alors tendu et confère alors une très forte résistance mécanique au tissu ainsi constitué.

### MISE EN OEUVRE ET AVANTAGES

Lors d'un choc frontal de l'aéronef, l'amorti de la tête d'un passager sur l'arrière du dossier du siège de devant est d'autant plus efficace, que la partie textile est élastique. De même, lors d'un choc vers le bas, l'amorti du passager se fait au niveau de l'assise du siège, et est d'autant plus efficace que la bande ajoutée sous l'assise est élastique. En effet, l'amorti repose sur un transfert de l'énergie cinétique du passage en énergie élastique de la partie textile. On minimise le choc du passager, c'est-à-dire la force transmise au passager pour passer de la vitesse de croisière à l'arrêt, en étalant l'amorti sur une plage de temps aussi importante que possible. Une constante d'élasticité suffisant faible, ce qui revient à avoir un textile assez élastique, permet donc d'étaler dans le temps le choc et de minimiser le ressenti par le passager. La ténacité des fibres utilisées pour constituer le fil ou les fils, divisée par la densité linéaire des fibres, définit la résistance du textile, qui ne se déchire pas lors du choc. Le textile peut donc supporter le choc d'un passager lancé à pleine vitesse, dans le cas d'un crash aéronautique de l'aéronef, par choc frontal, ou lors d'un choc vers le bas dans le cas de la bande située sous l'assise.

La résistance à la rupture est en général faible pour les fibres élastiques. L'élasticité s'obtient en permettant à des filaments individuels de coulisser les uns par rapport aux autres, au sein d'un même fil. La faible cohésion entre les filaments est un problème, lors de la résistance à la rupture car les filaments individuels se désolidarisent à des niveaux de force faible. L'utilisation de fils à très haute ténacité, tels que des fibres aramides (Kevlar^{®} ou Twaron^{®}), polyétherimide (Ultem^{®}), polyéthercétone (PEEK^{®}), polyamide (Nylon^{®}), les fibres naturelles (lin, chanvre ou jute) ou encore poléthylène à haut poids moléculaire (Dyneema^{®} ou Spectra^{®}), permet d'allier ces caractéristiques contradictoires d'élasticité et de ténacité, et ceci grâce à la forme du tricot élastique, ou à l'utilisation d'un tissage mixte. Le tricot est une mise en forme du fil en mailles, n'utilisant qu'un seul fil pour tout le textile. L'utilisation d'un fil unique de grande taille garantit la tenue mécanique de l'ensemble, en évitant les points de rupture du fil. Le point de jersey utilisé permet d'obtenir cette élasticité de par sa structure, indépendamment de l'élasticité du fil. Alternativement, l'utilisation d'un tissage combinant un fil élastique et un fil à haute tenacité lâche permet d'aboutir au même résultat. L'utilisation d'une structure élastique et d'un fil à haute ténacité permet d'allier une faible décélération pour le passager et une excellente tenue mécanique de la partie textile.

## Revendications

1. Siège pour aéronef comportant :
- un squelette (1) assurant la résistance mécanique de la structure du siège, et
- deux parties flexibles formant un dossier (2) et une assise (3) du siège,
**caractérisé en ce qu'**il comprend, en plus, une bande de renfort (4) placée derrière le dossier (2) et/ou ajoutée sous l'assise (3), en textile absorbeur d'énergie, pour respectivement amortir le basculement de la tête d'un passager se trouvant sur le siège de derrière, en cas de choc frontal violent de l'aéronef, et/ou amortir le corps du passager se trouvant sur le siège, en cas de choc violent vers le bas de l'aéronef,
et **en ce que** la bande de renfort (4) est plus déformable et plus résistante que le dossier (2) et/ou l'assise (3).

2. Siège selon la revendication 1, **caractérisé en ce qu'**il comporte une bande de renfort (4) en textile absorbeur d'énergie, placée derrière le dossier (2), pour amortir le basculement de la tête d'un passager se trouvant sur le siège de derrière, en cas de choc violent de l'aéronef.

3. Siège selon la revendication 1 ou 2, **caractérisé en ce qu'**il comporte une bande de renfort (4) en textile absorbeur d'énergie, ajoutée sous assise (3), pour amortir le corps du passager se trouvant sur le siège, en cas de choc violent vers le bas de l'aéronef.

4. Siège selon l'une quelconque des revendications précédentes, **caractérisé en ce que** le squelette (1) présente un vide au milieu du dossier (2).

5. Siège selon l'une des revendications 1 à 3, **caractérisé en ce que** le dossier (2) présente une face arrière concave pour ménager un espace pour la déformation de la bande de renfort (4).

6. Siège selon l'une des revendications 2 ou 5, **caractérisé en ce que** la bande de renfort (4) est située légèrement en retrait par rapport au dossier (2).

7. Siège selon la revendication 3, **caractérisé en ce que** la bande de renfort (4) est située légèrement en-dessous de l'assise (3).

8. Siège selon l'une quelconque des revendications précédentes, **caractérisé en ce que** la bande de renfort (4) est constituée d'un textile comportant un fil de haute ténacité qui est mis en forme pour constituer un textile plus déformable que le dossier (2) et/ou que l'assise (3).

9. Siège selon la revendication 1, **caractérisé en ce que** le textile absorbeur d'énergie de la bande de renfort (4) est constitué d'un tricotage de structure à un seul fil (10).

10. Siège selon la revendication 9, **caractérisé en ce que** le tricotage est du type en point de jersey.

11. Siège selon la revendication 9 ou 10, **caractérisé en ce que** le tricotage est constitué de plusieurs fils en parallèle (20).

12. Siège selon la revendication 1, **caractérisé en ce que** le textile absorbeur d'énergie de la bande de renfort (4) est tissé avec des fils de trame (40) et des fils de chaîne (50).

13. Siège selon la revendication 12, **caractérisé en ce qu'**on utilise des fils de trame (40) et des fils de chaîne (50) qui ont approximativement la même résistance à la rupture.

14. Siège selon la revendication 12 ou 13, **caractérisé en ce que** le fil utilisé pour constituer le fil de trame (40) et de chaîne (50) est constitué en fait d'un fil élastique (60) tendu et entouré d'un fil à haute ténacité (62), mais lâche.

15. Siège selon la revendication 14, **caractérisé en ce que** le fil élastique (60) qui est tendu est en polyamide.

16. Siège selon l'une quelconque des revendications précédentes, **caractérisé en ce que** le textile absorbeur d'énergie de la bande de renfort (4) est constitué de fil(s) en un matériau faisant partie du groupe réunissant les fibres polyéthérimide, les fibres polyéthercétones, les fibres polyéthylène à haut poids moléculaire, les fibres méta- et para-aramide, les fibres naturelles et les fibres en polyamide.

## Patentansprüche

1. Sitz für ein Luftfahrzeug, umfassend:
- ein Skelett (1), das die mechanische Festigkeit der Struktur des Sitzes gewährleistet, und
- zwei flexible Teile, die eine Rückenlehne (2) und eine Sitzfläche (3) des Sitzes bilden,
**dadurch gekennzeichnet, dass** er ferner ein Verstärkungsband (4) aus einem energieabsorbierenden Textil umfasst, das hinter der Rückenlehne (2) platziert und/oder unter der Sitzfläche (3) angebracht ist, um jeweils das Kippen des Kopfs eines Passagiers, der sich auf dem hinteren Sitz befindet, im Fall eines heftigen frontalen Stoßes des Luftfahrzeugs abzufangen, und/oder den Körper des Passagiers, der sich auf dem Sitz befindet, im Fall eines heftigen Stoßes des Luftfahrzeugs nach hinten abzufangen,
und dass das Verstärkungsband (4) verformbarer und widerstandsfähiger ist als die Rückenlehne (2) und/oder die Sitzfläche (3).

2. Sitz nach Anspruch 1, **dadurch gekennzeichnet, dass** er ein Verstärkungsband (4) aus einem energieabsorbierenden Textil umfasst, das hinter der Rückenlehne (2) platziert ist, um das Kippen des Kopfs eines Passagiers, der sich auf dem hinteren Sitz befindet, im Fall eines heftigen Stoßes des Luftfahrzeugs abzufangen.

3. Sitz nach Anspruch 1 oder 2, **dadurch gekennzeichnet, dass** er ein Verstärkungsband (4) aus energieabsorbierendem Textil umfasst, das unter der Sitzfläche (3) angebracht ist, um den Körper des Passagiers, der sich auf dem Sitz befindet, im Fall eines heftigen Stoßes des Luftfahrzeugs nach hinten abzufangen.

4. Sitz nach einem der vorhergehenden Ansprüche, **dadurch gekennzeichnet, dass** das Skelett (1) in der Mitte der Rückenlehne (2) einen Hohlraum aufweist.

5. Sitz nach einem der Ansprüche 1 bis 3, **dadurch gekennzeichnet, dass** die Rückenlehne (2) eine konkave Rückfläche aufweist, um einen Raum für die Verformung des Verstärkungsbands (4) bereitzustellen.

6. Sitz nach einem der Ansprüche 2 oder 5, **dadurch gekennzeichnet, dass** das Verstärkungsband (4) bezüglich der Rückenlehne (2) leicht zurückgezogen angeordnet ist.

7. Sitz nach Anspruch 3, **dadurch gekennzeichnet, dass** das Verstärkungsband (4) leicht unterhalb des Sitzfläche (3) angeordnet ist.

8. Sitz nach einem der vorhergehenden Ansprüche, **dadurch gekennzeichnet, dass** das Verstärkungsband (4) durch ein Textil gebildet ist, das einen Faden von hoher Festigkeit umfasst, der derart in Form gebracht ist, dass er ein Textil bildet, welches verformbarer ist als die Rückenlehne (2) und/oder die Sitzfläche (3).

9. Sitz nach Anspruch 1, **dadurch gekennzeichnet, dass** das energieabsorbierende Textil des Verstärkungsbands (4) durch ein Gestrick mit einer Struktur mit einem einzigen Faden (10) gebildet ist.

10. Sitz nach Anspruch 9, **dadurch gekennzeichnet, dass** das Gestrick vom Typ Jersey ist.

11. Sitz nach Anspruch 9 oder 10, **dadurch gekennzeichnet, dass** das Gestrick durch mehrere parallele Fäden (20) gebildet ist.

12. Sitz nach Anspruch 1, **dadurch gekennzeichnet, dass** das energieabsorbierende Textil des Verstärkungsbands (4) mit Schussfäden (40) und mit Kettfäden (50) gewebt ist.

13. Sitz nach Anspruch 12, **dadurch gekennzeichnet, dass** man Schussfäden (40) und Kettfäden (50) verwendet, die ungefähr die gleiche Bruchfestigkeit haben.

14. Sitz nach Anspruch 12 oder 13, **dadurch gekennzeichnet, dass** der zum bilden des Schussfadens (40) und des Kettfadens (50) verwendete Faden tatsächlich durch einen elastischen Faden (60) gebildet ist, der gespannt und locker mit einem Draht von hoher Festigkeit (62) umwickelt ist.

15. Sitz nach Anspruch 14, **dadurch gekennzeichnet, dass** der gespannte elastische Faden (60) aus Polyamid ist.

16. Sitz nach einem der vorhergehenden Ansprüche, **dadurch gekennzeichnet, dass** das energieabsorbierende Textil des Verstärkungsbands (4) gebildet ist durch einen Draht/Drähte aus einem Material ausgewählt aus der Gruppe der Polyetherimid-Fasern, der Polyetherketonfasern, der Polyethylenfasern mit hohem Molekulargewicht, der Meta- und Para-Aramidfasern, der natürlichen Fasern und der Polyamidfasern.

## Claims

1. Seat for airplane comprising:
- a skeleton () assuring the mechanical strength of the structure of the seat, and
- two flexible parts forming a backrest (2) and a seat portion (3) of the seat,
**characterised in that** it comprises, in addition, a reinforcing strip (4) placed behind the backrest (2) and/or added under the seat portion (4), made of energy absorbing textile, respectively to absorb the rocking of the head of a passenger situated on the seat behind, in the event of violent frontal impact of the airplane, and/or to cushion the body of the passenger situated on the seat, in the event of violent downward impact of the airplane,
and **in that** the reinforcing strip (4) is more deformable and more resistant than the backrest (2) and/or the seat portion (3).

2. Seat according to claim 1, **characterised in that** it comprises a reinforcing strip (4) made of energy absorbing textile, placed behind the backrest (2), to absorb the rocking of the head of a passenger situated on the seat behind, in the event of violent impact of the airplane.

3. Seat according to one of claims 1 or 2, **characterised in that** it comprises a reinforcing strip (4) made of energy absorbing textile, added under the seat portion (3), to cushion the body of the passenger situated on the seat, in the event of violent downward impact of the airplane.

4. Seat according to any of the preceding claims, **characterised in that** the skeleton (1) has a void in the middle of the backrest (2).

5. Seat according to one of claims 1 to 3, **characterised in that** the backrest (2) has a concave rear face to arrange a space for the deformation of the reinforcing strip (4).

6. Seat according to one of claims 2 or 5, **characterised in that** the reinforcing strip (4) is situated slightly set back in relation to the backrest (2).

7. Seat according to claim 3, **characterised in that** the reinforcing strip (4) is situated slightly below the seat portion (3).

8. Seat according to any of the preceding claims, **characterised in that** the reinforcing strip (4) consists of a textile comprising a high tenacity yarn which is shaped to constitute a textile that is more deformable than the backrest (2) and/or the seat portion (3).

9. Seat according to claim 1, **characterised in that** the energy absorbing textile of the reinforcing strip (4) consists of a knitting of single yarn (10) structure.

10. Seat according to claim 9, **characterised in that** the knitting is of the Jersey stitch type.

11. Seat according to claim 9 or 10, **characterised in that** the knitting consists of several yarns in parallel (20).

12. Seat according to claim 1, **characterised in that** the energy absorbing textile of the reinforcing strip (4) is woven with weft yarns (40) and warp yarns (50).

13. Seat according to claim 12, **characterised in that** weft yarns (40) and warp yarns (50) are used which have approximately the same breaking strength.

14. Seat according to claim 12 or 13, **characterised in that** the yarn used to constitute the weft (40) and warp (50) yarn consists in fact of a tight elastic yarn (60) surrounded by a yarn with high tenacity (62), but loose.

15. Seat according to claim 14, **characterised in that** the elastic yarn (60) that is tight is made of polyamide.

16. Seat according to any of the preceding claims, **characterised in that** the energy absorbing textile of the reinforcing strip (4) consists of yarn(s) made of a material forming part of the group including polyetherimide fibres, polyetherketone fibres, high molecular weight polyethylene fibres, meta- and para-aramid fibres, natural fibres and polyamide fibres.
